# NEUE EUROPÄISCHE PATENTSCHRIFT

(11) **EP 2 289 776 B2**
(45) Veröffentlichungstag und Bekanntmachung des Hinweises auf die Entscheidung über den Einspruch: **20.07.2022**
(45) Hinweis auf die Patenterteilung: 11.01.2017
(21) Anmeldenummer: 10174200.5
(22) Anmeldetag: 26.08.2010
(51) Int. Cl.: B62D 59/04

(54) **Hilfsfahrantrieb für einen Anhänger**
Auxiliary drive for a trailer
Dispositif d'entraînement secondaire pour une remorque

(30) Priorität: 26.08.2009 DE 202009005185 U
(43) Veröffentlichungstag der Anmeldung: 02.03.2011
(73) Patentinhaber: Alois Kober GmbH, 89359 Kötz (DE)
(72) Erfinder: Müller, Thomas, 89364 Ettlishofen (DE)
(74) Vertreter: Ernicke, Klaus Stefan

(56) Entgegenhaltungen:
- EP-A1- 1 886 905
- EP-A2- 0 278 943
- EP-A2- 1 679 251
- EP-A2- 1 840 019
- DE-A1- 19 614 752
- DE-U1-202009 005 524
- FR-A1- 2 786 456
- JP-A- 2006 069 534

## Beschreibung

Die Erfindung betrifft einen Hilfsfahrantrieb mit den Merkmalen im Oberbegriff des Hauptanspruchs.

Ein solcher Hilfsfahrantrieb für fremdbewegte Fahrzeuge, insbesondere Anhänger, ist aus der DE 20 2009 005 524 U1 bekannt. Der Hilfsfahrantrieb kann eine oder mehrere Antriebseinheiten aufweisen, die jeweils ein motorisch angetriebenes walzenförmiges Antriebselement und eine Zustelleinrichtung aufweisen, mit der das Antriebselement für eine Rangierfahrt an ein Fahrzeugrad des Anhängers zugestellt und in einer Arbeitsposition in Kontakt gebracht werden kann. Mit der Zustelleinrichtung kann das Antriebselement auch in eine Ruhestellung zurückbewegt und vom Fahrzeugrad gelöst werden. Die Zustelleinrichtung besitzt einen eigenen Zustellantrieb. Der Hilfsfahrantrieb kann mittels einer mobilen Bedieneinrichtung gesteuert werden.

Andere Hilfsfahrantriebe der genannten Art sind z.B. aus der EP 1 836 085 B1 oder der EP 1 447 312 A1 bekannt.

Die DE202009005524U1 offenbart außerdem einen Hilfsantrieb für fremdbewegte Fahrzeuge gemäß dem Oberbegriff des Anspruchs 1.

Die im Stand der Technik beschriebenen Hilfsfahrantrieb sind noch nicht für den Praxiseinsatz und die dabei auftretenden Einflüsse und Umgebungsbedingungen hinreichend angepasst.

Es ist Aufgabe der vorliegenden Erfindung, eine für den Praxiseinsatz verbesserte Ausgestaltung eines Hilfsfahrantriebs aufzuzeigen.

Die Erfindung löst diese Aufgabe mit den Merkmalen im Hauptanspruch.

Die beanspruchte Sicherungseinrichtung kann für einen gefahrenfreien Betrieb des Hilfsfahrantriebs sorgen und lässt sich mit beliebigen Arten von Hilfseinrichtungen einsetzen. Sie erfasst die Bedienungssituation für die Bedienung des Hilfsfahrantriebs und/oder die Betriebssituation des Fahrzeugs bzw. Anhängers und ggf. auch des Hilfsfahrantriebs und prüft, ob die Situation für einen Rangierbetrieb geeignet ist oder nicht. Die Sicherungseinrichtung kann entsprechend der Situation den Hilfsfahrantrieb aktivieren, so dass er von einem Bediener mit einer Bedieneinrichtung betätigt und gesteuert werden kann. Andererseits kann die Sicherungseinrichtung den Hilfsfahrantrieb auch in praxisgerechter Weise wieder deaktivieren, um Fehlfunktionen oder auch Fehlbedienungen zu vermeiden. Die Aktivierung bzw. Deaktivierung kann ereignisabhängig und/oder zeitabhängig sein. Ferner kann die Sicherungseinrichtung auch einzelne Funktionen des Hilfsfahrantriebs beeinflussen und insbesondere aktivieren oder deaktivieren.

Mit der Sicherungseinrichtung kann insbesondere verhindert werden, dass ein Hilfsfahrantrieb während einer Gespannfahrt des Anhängers betätigt wird. Ein Anstellen des Antriebselements an das rotierende Fahrzeugrad kann eine Bremswirkung haben und einen Unfall des Gespanns verursachen. Das Fahrzeug bzw. der Anhänger kann durch die Sicherungseinrichtung nur im abgestellten und vom Zugfahrzeug gelösten Zustand rangiert werden.

Andererseits kann die Sicherungseinrichtung für einen unfallfreien Rangierbetrieb sorgen. Sie kann insbesondere bewirken, dass eine Bedienung des Hilfsfahrantriebs nur in Verbindung mit einer geeigneten Sicherung der Fahrzeugabstellposition durch den Bediener möglich ist. Insbesondere kann eine Bedienung des Hilfsfahrantriebs dadurch an eine Betätigung einer Feststellbremse für einen Anhänger gekoppelt werden.

Mit einer Detektionseinrichtung wird die Bediensituation und/oder die Betriebssituation des Fahrzeugs und/oder des Hilfsfahrantriebs erfasst und ausgewertet. Ein Rangierbetrieb ist dadurch nur in entsprechend geeigneten Situationen möglich. Anderenfalls bleibt der Hilfsfahrantrieb deaktiviert. Mit der Detektionseinrichtung können ein oder mehrere Einflussfaktoren für die besagte Situation erfasst werden. Hierbei ist eine unmittelbare oder mittelbare Situationserkennung möglich.

Eine Anzeige für Betriebszustände des Hilfsfahrantriebs und/oder einer evtl. Schlingerbremse ist zur Erhöhung der Bedienungs-, Betriebs- und Unfallsicherheit vorteilhaft. Hierbei kann dem Bediener die Betriebsbereitschaft oder eine evtl. Störung und/oder die Position eines Antriebselements des Hilfsfahrantriebs am Fahrzeugrad signalisiert werden, was vorzugsweise im Deichselbereich geschehen kann und beim Ankuppeln an ein Zugfahrzeug dienlich ist. Dies kann insbesondere die Rückzugposition des Antriebselements betreffen, wodurch ein Losfahren des Gespanns mit zugestelltem Hilfsfahrantrieb vermieden werden kann.

Die Sicherungseinrichtung lässt sich bei Neufahrzeugen und der Erstmontage eines Hilfsfahrantriebs implementieren. Sie lässt sich auch bei vorhandenen Fahrzeugen und Hilfsfahrantrieben nachrüsten.

In den Unteransprüchen sind vorteilhafte Ausgestaltungen der Erfindung angegeben.

Die Erfindung ist in den Zeichnungen beispielhaft und schematisch dargestellt. Im Einzelnen zeigen:
- Figur 1:: ein Gespann von Anhänger und Zugfahrzeug mit einem Hilfsfahrantrieb und einer Sicherungseinrichtung am Anhänger in abgebrochener Seitenansicht,
- Figur 2:: eine abgebrochene Draufsicht auf einen Hilfsfahrantrieb gemäß Pfeil II von Figur 1,
- Figur 3:: eine Seitenansicht des Fahrzeugs und des Hilfsfahrantriebs mit einer Ausgestaltung der Sicherungseinrichtung,
- Figur 4:: eine Seitenansicht einer Variante der Sicherungseinrichtung,
- Figur 5:: eine Seitenansicht eines abgebrochenen und vergrößerten Fahrzeugbereichs an der Anhängekupplung mit weiteren Details einer Sicherungseinrichtung und
- Figur 6:: eine abgebrochene Draufsicht auf den vorderen Deichselbereich mit einer Anzeige.

Die Erfindung betrifft eine Sicherungseinrichtung (3) für einen Hilfsantrieb (2) und ein Sicherungsverfahren. Sie betrifft ferner einen mit einer solchen Sicherungseinrichtung (3) ausgerüsteten Hilfsantrieb (2) und ein mit Hilfsantrieb (2) und Sicherungseinrichtung (3) ausgestattetes Fahrzeug (1).

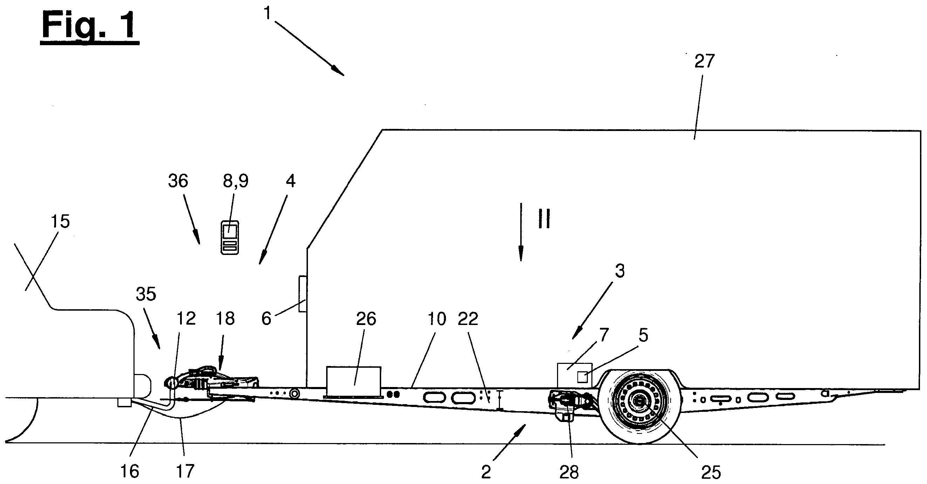

Das Fahrzeug (1) kann mit einem Hilfsantrieb (2) bewegt und insbesondere rangiert werden. Der Hilfsantrieb (2) wird nachfolgend entsprechend seiner Funktion als Hilfsfahrantrieb (2) bezeichnet. Das Fahrzeug (1) kann in beliebig geeigneter Weise ausgebildet sein. Insbesondere kann es sich um ein fremdbewegtes Fahrzeug, speziell einen Anhänger handeln, der gemäß Figur 1 mit einem Zugfahrzeug (15) zu einem Gespann gekoppelt werden kann und vom Zugfahrzeug (15) bewegt, insbesondere gezogen wird. Mit dem Hilfsfahrantrieb (2) kann der abgekuppelte Anhänger (1) motorisch bewegt und rangiert werden.

Das Fahrzeug bzw. der Anhänger (1) besitzt ein Fahrgestell (10) mit einer oder mit mehreren Achsen (24) und mit Fahrzeugrädern (25). Das Fahrgestell (10) kann einen oder mehrere Längsträger (22) und ggf. einen oder mehrere Querträger (23) aufweisen, wobei letzterer ggf. zur mechanischen Stabilisierung des Hilfsfahrantriebs (2) dienen kann. Das Fahrzeug (1) hat am vorderen Ende eine Deichsel (11), die starr oder beweglich sein kann. Der Anhänger (1) hat im gezeigten Ausführungsbeispiel eine starre Zugdeichsel (11), die z.B. als V-Deichsel ausgebildet ist. Sie kann alternativ eine Rohrdeichsel sein. In weiterer Abwandlung kann eine Deichsel beweglich, insbesondere schwenkbar und z.B. an einem Drehschemel angeordnet sein.

Der Anhänger (1) weist ferner eine Bremseinrichtung (18) in Verbindung mit Radbremsen auf. Die Bremseinrichtung (18) kann eine Betriebsbremse (19) und eine Feststellbremse (20) aufweisen. Die Betriebsbremse (19) kann z.B. als Trägheits- oder Auflaufbremse, als elektrisch oder pneumatisch gesteuerte Betriebsbremse oder in sonstiger Weise ausgebildet sein. Die Feststellbremse (20) kann z.B. eine am Anhänger (1) mittels eines geeigneten Betätigungsorgans, insbesondere eines schwenkbaren Handbremshebels (21) zu betätigende Handbremse sein.

Der Anhänger (1) weist am vorderen Deichselende eine Anhängerkupplung (12) auf, die ein geeignetes Kupplungsteil (14), z.B. eine Kupplungsschale oder Kalotte mit einem Kupplungsmechanismus und einem geeigneten Bedienorgan, z.B. einem schwenkbaren Kupplungshebel (13), aufweist.

Am Zugfahrzeug (15) ist eine Zugkupplung (16) angeordnet, die z.B. als Kugelkopfkupplung mit einem gebogenen Kugelhals und einem Kugelkopf am Ende ausgebildet ist. Die Anhängerkupplung (12) wird mit der Kupplungsschale (14) auf dem Kugelkopf eingehängt und gegen Abheben gesichert. Die Anhängerkupplung (12) und die Zugkupplung (16) sorgen für eine mechanische Kupplungsverbindung von Anhänger (1) und Zugfahrzeug (15). Außerdem kann eine Betriebsmittelverbindung (17) zwischen Anhänger (1) und Zugfahrzeug (15) vorhanden sein, die z.B. aus einem Elektrokabel mit Stecker und Steckdose besteht, wobei über das Kabel Signal- und Leistungsströme übertragen werden können und auch ein Massekontakt vorhanden ist.

Am Fahrzeug bzw. Anhänger (1) ist ferner eine Energieversorgung (26) mit einem Speicher angeordnet, die beliebig und z.B. als elektrische Batterie ausgebildet sein kann. Der Strom wird vom Zugfahrzeug (15) im Gespannbetrieb zugeführt. Er kann ggf. auch von einer stationären Elektroversorgung eingespeist werden.

Das Fahrzeug (1) weist ferner einen Aufbau (27) auf dem Fahrgestell (10) auf. Dieser kann von beliebiger Art und Größe sein. Es kann sich insbesondere um einen kastenartigen Aufbau (27) für Wohnwagen, Verkaufswagen oder dgl. handeln.

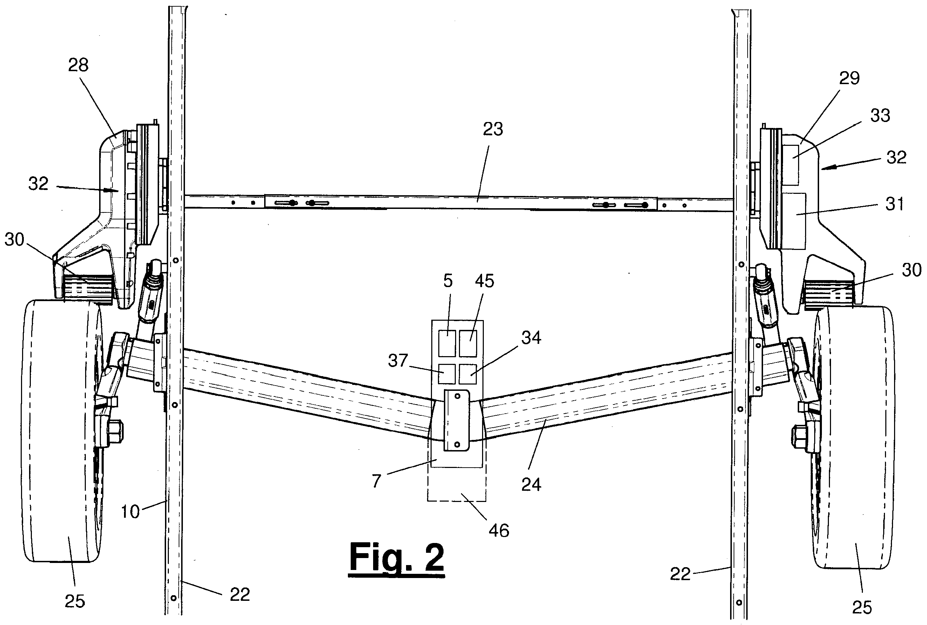

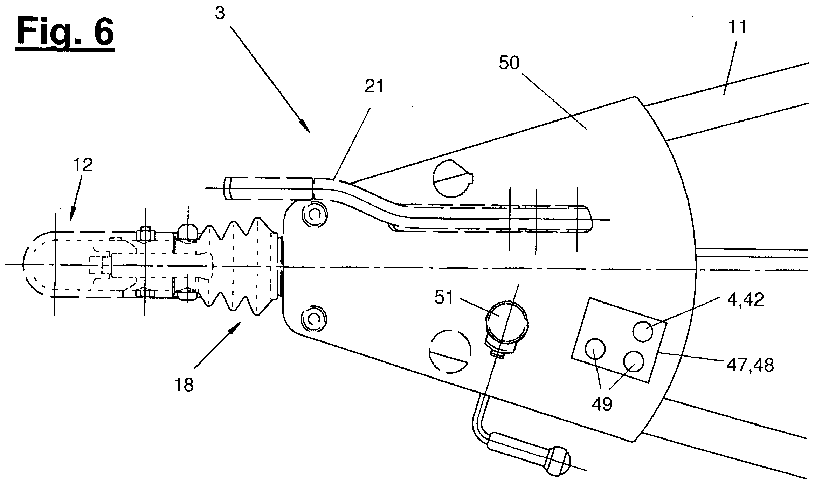

Das Fahrzeug (1) kann außerdem ein Stützrad (51) aufweisen, dass z.B. im Deichselbereich fest oder lösbar angebracht ist und in Figur 6 schematisch angedeutet ist. Ferner kann an der Anhängerkupplung (12) eine Einrastsicherung (nicht dargestellt) angeordnet sein, die ein Einrasten der Kupplungsschale (14) auf dem Kugelkopf detektiert und durch einen federbelasteten ausfahrbaren Stift oder dgl. anzeigt. Ferner kann die Bremseinrichtung (18) eine Schlingerbremse (46) aufweisen, die mit ein oder mehreren Sensoren Schwank- und Schlingerbewegungen des Fahrzeugs (1) im Gespannbetrieb erfasst und die Radbremsen betätigt. Die Sensoren können insbesondere Beschleunigungen, Gierraten oder dgl. aufnehmen. Eine solche Schlingerbremse (46) kann z.B. gemäß der EP 1 598 249 A1, EP 2 022 688 A2, EP 2 022 654 A2 oder DE 20 2006 004 679 U1 ausgebildet sein. Die Betätigungsseinheit der Schlingerbremse (46), die z.B. an der Achse (24) angeordnet ist, ist in Figur 2 schematisch und gestrichelt dargestellt.

Das Fahrzeug (1) kann im abgekoppelten Zustand mittels eines Hilfsfahrantriebs (2) bewegt werden. Dieser kann die Funktion eines Rangierantriebs haben und Fahrbewegungen des Anhängers (1) nach unterschiedlichen Richtungen in gesteuerter Weise ermöglichen. Er ermöglicht Geradeausfahrten und Kurvenfahrten mit beliebigen Radien und veränderlichen Geschwindigkeiten. Der Hilfsfahrantrieb (2) kann in unterschiedlicher Weise ausgebildet sein, z.B. entsprechend DE 20 2009 005 524 U1 oder der anderen eingangs genannten Entgegenhaltungen.

Figur 2 verdeutlicht schematisch den Aufbau eines solchen Hilfsfahrantriebs (2), der z.B. bei einem Einachsanhänger zwei beidseits angeordnete Antriebseinheiten (28,29) aufweist, die jeweils auf ein Fahrzeugrad (25) einwirken. Bei einer Tandemachse oder einer anderen Mehrfachachsanordnung können mehr als zwei Antriebseinheiten (28,29) vorhanden sein.

Die Antriebseinheiten (28,29) weisen jeweils mindestens ein bewegliches Antriebselement (30) auf, welches z.B. als rotierende Treibwalze ausgebildet ist und von einem Motor (31) drehend angetrieben werden kann. Der Motor (31) kann z.B. ein einzelner oder mehrfacher steuerbarer Elektromotor sein. Daneben sind beliebige andere steuerbare Motor- oder Antriebsausbildungen möglich.

Die Antriebseinheit (28,29) weist jeweils eine Zustelleinrichtung (32) auf, mit der das Antriebselement (30) zwischen einer zurückgezogenen Ruheposition und der in Figur 2 dargestellten Antriebsposition vor- und ggf. auch zurückbewegt werden kann. In der Antriebsposition wird das Antriebselement (30) an geeigneter Stelle an das Fahrzeugrad (25) angedrückt und dreht dieses bei seiner angetriebenen Eigenrotation. Die Zustelleinrichtung (32) weist einen Zustellantrieb (33) auf. Dies kann ein eigener Antrieb sein. Alternativ kann dieser Antrieb vom Motor (31) abgeleitet sein, der dann für die Zustellung und für die Walzenrotation sorgt. Der Zustellantrieb (33) kann ein- und ausgeschaltet und ggf. gesteuert werden.

In der zurückgezogenen Ruhestellung ist das Antriebselement (30) vom Fahrzeugrad (25) gelöst und distanziert. Die Zustellbewegung kann eine beliebige Bahn und Kinematik haben. Dies kann eine Linearbewegung oder eine Schwenkbewegung mit entsprechender Führung sein. Ferner ist eine Kinematik mit einer Kombination von mehreren rotatorischen und/oder translatorischen Bewegungsachsen möglich.

Der Hilfsfahrantrieb (2) besitzt eine Steuerung (7). Dies kann z.B. eine zentrale Steuerung für zwei oder mehr Antriebseinheiten (28,29) sein. In Figur 2 ist z.B. die Anordnung eines solchen gemeinsamen Steuerungsgerätes (7) an zentraler Stelle, z.B. an der Fahrzeugachse, dargestellt. Das Steuergerät (7) kommuniziert über Leitungen oder drahtlos per Funk oder dgl. mit den Motorsteuerungen in den Antriebseinheiten (28,29). In Abwandlung der gezeigten Ausführungsform kann die Steuerung (7) auch in einem der Hilfsfahrantriebe (28,29) untergebracht und mit der oder den dortigen Motorsteuerungen kombiniert werden.

Der Hilfsfahrantrieb (2) und seine ein oder mehreren Antriebseinheiten (28,29) können von einem Bediener mittels einer Bedieneinrichtung (8) betätigt und gesteuert werden. Die Bedieneinrichtung (8) beinhaltet ein Bediengerät (9), welches vorzugsweise als Fernbedienung ausgebildet ist und vom Bediener in der Hand gehalten werden kann. Das mobile Bediengerät (9) weist eine Anzeige und ein oder mehrere Bedienelemente in Form von Tasten, einem Joystick, Touchpad oder dgl. auf. Die Bedieneinrichtung (8) und das Bediengerät (9) können in beliebig geeigneter Weise ausgebildet sein. Im gezeigten Ausführungsbeispiel können sie eine Konfiguration entsprechend der DE 20 2009 005 524 U1 haben.

Das mobile Bedienteil (9) kann mit der Steuerung (7) des Hilfsfahrantriebs (2) über eine Kommunikationseinrichtung (45) kommunizieren und Signale in beide Richtungen austauschen, insbesondere Steuer- und Anzeigensignale. Die Kommunikation kann leitungsgebunden über ein Kabel oder drahtlos per Funk, Infrarot, Ultraschall oder auf andere Weise erfolgen.

Der Hilfsfahrantrieb (2) weist eine Sicherungseinrichtung (3) für seine Funktion in Abhängigkeit von der Betriebs- und/oder Bediensituation auf. Die Sicherungseinrichtung (3) besitzt eine Detektionseinrichtung (4) zur Erfassung einer für den Rangierbetrieb relevanten Betriebs- und/oder Bediensituation. Die Sicherungseinrichtung (3) weist ferner eine Schalteinrichtung (5) zur Freigabe oder Sperrung des Hilfsfahrantriebs (2) insgesamt oder hinsichtlich einzelner Funktionen auf. Für die Ausbildung und Anordnung der Detektionseinrichtung (4) und der Schalteinrichtung (5) gibt es verschiedene Ausgestaltungsmöglichkeiten.

Die Bediensituation betrifft die Frage, wo sich der Bediener und/oder das mobile Bedienteil (9) befinden, wenn die Steuerung (7) Bedien- und Steuersignale erhält.

Die Betriebssituation kann einerseits das Fahrzeug (1) betreffen. Kriterien sind z.B. ein Gespannbetrieb oder Fahrbetrieb des Anhängers. Während der Gespannfahrt soll der Hilfsfahrantrieb (2) nicht betätigt bzw. bedient werden können. Ein weiteres Kriterium ist die Kupplungssituation. Wenn die mechanische Kupplungsverbindung gemäß Figur 1 geschlossen ist, kann das Fahrzeug (1) nicht unabhängig vom Zugfahrzeug (15) durch den Hilfsfahrantrieb (2) bewegt und rangiert werden. Entsprechendes gilt bei einer geschlossenen Betriebsmittelverbindung (17). Ein anderes Kriterium ist eine Blockiersituation der Fahrzeugräder (25) bzw. eine Lagesicherung des Anhängers (1). Im Rahmen des Rangierbetriebs kann z.B. sichergestellt werden, dass der Anhänger (1) nicht bei angezogener Feststellbremse (20) bewegt wird oder dass nach dem Rangieren der Hilfsfahrantrieb (2) bzw. das Antriebselement (30) gelöst wird, ohne dass die Abstellposition des Fahrzeugs (1) gesichert ist. Das Fahrzeug (1) könnte sich sonst u.U. an einer abschüssigen Stelle von selbst unerlaubt in Bewegung setzen.

Ferner kann die Umgebung des Fahrzeugs (1) ein Kriterium für die Betriebssituation sein. Dies betrifft z.B. Hindernisse oder Gefahrenstellen im Rangierbereich.

Daneben sind weitere Kriterien für die Betriebssituation des Fahrzeugs oder Anhängers (1) möglich.

Die angesprochene Betriebssituation kann alternativ oder zusätzlich die Situation des Hilfsfahrantriebs (2) betreffen. Bei Störungen des Hilfsfahrantriebs (2) oder seiner Komponenten, die z.B. durch eine in die Steuerung (7) implementierte Überwachungseinrichtung (37) diagnostiziert werden, kann ein Rangierbetrieb unterbunden oder ggf. nur unter Einschränkungen durchgeführt werden.

Die Sicherungseinrichtung (3) kann den Hilfsfahrantrieb (2) in Abhängigkeit von der Betriebs- und/oder Bediensituation aktivieren und deaktivieren. Der Hilfsfahrantrieb (2) kann dabei insgesamt in Betriebsbereitschaft eingeschaltet und aus der Bereitschaft abgeschaltet werden. In der Betriebsbereitschaft oder Aktivierungsphase ist eine Bedienung und Betätigung mittels der Bedieneinrichtung (8) bzw. des mobilen Bedienteils (9) möglich. In der Deaktivierungsphase werden Bediensignale oder Betätigungssignale für die Kommunikationseinrichtung (45) oder durch Signalrauschen in der Umgebung oder dgl. nicht angenommen. In der Deaktivierungsphase kann außerdem die Energieversorgung des Hilfsfahrantriebs (2) und insbesondere seiner Antriebseinheiten (28,29) oder deren Komponenten unterbunden werden. In der Deaktivierungsphase können außerdem interne Störungen, z.B. Feuchtigkeit, Masseschlüsse, Kriechströme, Signalfehler oder dgl. nicht zu einem unerwünschten Betrieb des Hilfsfahrantriebs (2) oder seiner Komponenten führen. Insbesondere kann die Sicherungseinrichtung (3) in der Deaktivierungsphase verhindern, dass das Antriebselement (30) in einen bremsenden oder die Fahrsicherheit gefährdenden Kontakt mit dem Fahrzeugrad (25) kommt. Dies ist insbesondere für den vorgenannten Gespann- und Fahrbetrieb bedeutsam.

Die Sicherungseinrichtung (3) kann alternativ oder zusätzlich einzelne Funktionen des Hilfsfahrantriebs (2) aktivieren und deaktivieren. Dies kann wiederum in Abhängigkeit von der jeweiligen Betriebs- und/oder Bediensituation geschehen.

Die besagte Aktivierung und Deaktivierung erfolgt über die Schalteinrichtung (5), welche den Hilfsfahrantrieb (2) freigibt oder sperrt. In der Aktivierungs- oder Freigabephase kann der Hilfsfahrantrieb (2) bedient und zum Rangieren des Fahrzeugs (1) eingesetzt werden. Hierbei kann von der Sicherungseinrichtung (3) auch überwacht werden, ob eine solche Bedienung tatsächlich stattfindet oder nicht und wie deren Ablauf ist. Auch eine Plausibilitätskontrolle kann implementiert sein.

Die Deaktivierung zur Sperrung des Hilfsfahrantriebs (2) kann situationsbezogen bzw. ereignisabhängig erfolgen. Sie kann auch zeitabhängig sein. Über ein Zeitglied (34) an geeigneter Stelle, insbesondere in der Steuerung (7), kann nach Ablauf einer Zeitspanne die Deaktivierung erfolgen. Die Zeitspanne kann vorgegeben und evtl. auch veränderbar sein. Die Zeitspanne kann fix eingestellt sein und mit Aktivierung des Hilfsfahrantriebs (2) zu laufen beginnen. Die Zeitspanne kann andererseits an eine Bedienung des Hilfsfahrantriebs (2) gekoppelt sein, so dass ihr Beginn veränderlich ist. Wenn z.B. nach einem Bedien- oder Steuerbefehl während der Zeitspanne kein neuer Befehl eingegeben wird, erfolgt die Deaktivierung.

Die Aktivierung und Deaktivierung des Hilfsfahrantriebs (2) im Ganzen oder von einzelnen Funktionen des Hilfsfahrantriebs (2) kann über die Schalteinrichtung (5) erfolgen. Diese kann z.B. in die Steuerung (7) implementiert sein. Dies kann hardwaremäßig und/oder softwaremäßig erfolgen. Die Schalteinrichtung (5) kann auch getrennt von der Steuerung (7) untergebracht sein und mit dieser kommunizieren.

Eine Aktivierung und Deaktivierung des Hilfsfahrantriebs (2) kann im vorliegenden Fall z.B. durch eine Unterbrechung der Energieversorgung über die Schalteinrichtung (5) erfolgen. Diese unterbricht bei der Deaktivierung die Weiterleitung der Energie zu den Antriebseinheiten (28,29) und schaltet diese z.B. stromlos. Das Antriebselement (30) kann dadurch weder vom jeweiligen Antrieb (31,33) in Rotation versetzt, noch an das Fahrzeugrad (25) zugestellt werden. Es ist auch möglich, nur die Zustellung oder nur die Antriebsrotation zu unterbinden. Hier ist z.B. eine Zustellung eines frei drehbaren Antriebselements (30) zum Fahrzeugrad (25) möglich. Es sind auch andere Deaktivierungsfunktionen möglich, die eine Beeinträchtigung der Fahrzeugradbewegung im Gespann- und Fahrbetrieb verhindern.

Bei der Deaktivierung kann außerdem die Lagesicherung des Anhängers (1) in der Ruhestellung überprüft werden, wenn die Abstellposition nicht gesichert ist, was z.B. durch Betätigung der Feststellbremse (20) oder auf andere überprüfbare Weise erfolgt. Hier bleibt das Antriebselement (30) in Antriebs- und Andrückstellung am Fahrzeugrad (25) und verhindert dessen Drehung. Hierbei kann ein Warnsignal z.B. akustisch und/oder optisch von der Sicherungseinrichtung (3) ausgegeben werden.

Die Sicherungseinrichtung (3) kann außerdem alternativ oder zusätzlich eine Signaleinrichtung (6) aufweisen, die bei einem aktivierten Hilfsfahrantrieb (2) ein akustisches und/oder optisches oder sonstiges Warnsignal ausgibt und den Bediener auf die Aktivierungssituation aufmerksam macht.

Die Detektionseinrichtung (4) steht in Wirkverbindung mit der Schalteinrichtung (5) und/oder der Signaleinrichtung (6). Insbesondere kann die Detektionseinrichtung (4) die Schalteinrichtung (5) beeinflussen und deren Schaltfunktion auslösen. Die Detektionseinrichtung (4) und die Schalteinrichtung (5) können funktional und gegenständlich und auch örtlich getrennt angeordnet sein. Sie können alternativ miteinander kombiniert werden.

Die Schalteinrichtung (5) kann ihrerseits in der vorerwähnten Weise in Wirkverbindung mit einer Steuerung (7) des Hilfsfahrantriebs (2) stehen. Sie kann alternativ oder zusätzlich in Wirkverbindung mit der Signaleinrichtung (6) stehen. Die Schalteinrichtung (5) kann außerdem in mittelbarer oder unmittelbarer Wirkverbindung mit Komponenten des Hilfsfahrantriebs (2), z.B. mit dem Antriebselement (30) und/oder der Zustelleinrichtung (32) stehen und deren Funktion aktivieren oder deaktivieren. Ferner kann die Schalteinrichtung (5) auch in direkter oder mittelbarer Wirkverbindung mit der Energieversorgung (26) stehen und dieser beispielsweise auch direkt zugeordnet sein.

In den vorbeschriebenen Varianten wirkt die Schalteinrichtung (5) auf den Hilfsfahrantrieb (2) und dessen am Fahrgestell (10) befindliche Komponenten ein. Bei einer Deaktivierung kann insbesondere die Energieversorgung (26) in der beschriebenen Weise abgeschaltet werden. Alternativ oder zusätzlich kann die Schalteinrichtung (5) die Bedienbarkeit des Hilfsfahrantriebs (2) beeinflussen und hierzu mit der Bedieneinrichtung (8), vorzugsweise einem mobilen Bedienteil (9), in Wirkverbindung stehen. Ein Aktivieren des u.U. permanent mit Energie versorgten Hilfsfahrantriebs (2) ist in diesem Fall durch eine situationsbedingte Aktivierung oder Deaktivierung seiner Bedienbarkeit gegeben. Dies kann wiederum von der detektierten Betriebs- und/oder Bediensituation abhängig sein. Eine Deaktivierung kann z.B. in der vorbeschriebenen Weise zeitabhängig erfolgen.

Hierbei ist es beispielsweise möglich, dass die Schalteinrichtung (5) die Bedieneinrichtung (8), insbesondere ein mobiles Bedienteil (9), mit zeitlicher Begrenzung freigibt, wobei innerhalb eines fixen oder dynamischen Zeitfensters eine Bedienung möglich ist. Das Zeitglied (34) kann in diesem Fall der Bedieneinrichtung (8), insbesondere dem mobilen Bedienteil (9), zugeordnet sein. Zusätzlich kann ein ggf. überlagertes zeitabhängiges Abschalten des Hilfsfahrantriebs (2), z.B. von der Energieversorgung (26), über seine Komponenten durch ein oder mehrere implementierte weitere Zeitglieder vorhanden sein.

Die Detektionseinrichtung (4) kann eine bestehende, im Entstehen begriffene oder möglicherweise entstehende und für den Rangierbetrieb relevante Betriebssituation des Anhängers (1) und/oder des Hilfsfahrantriebs (2) detektieren. Hierbei kann z.B. über Erfassung entsprechender Merkmale oder Anzeichen eine Situationsentwicklung detektiert werden. Die erfassten Parameter oder Merkmale können direkte oder mittelbare Indikatoren für die besagte Betriebssituation sein.

Die Detektionseinrichtung (4) kann hierfür ein oder mehrere Detektionsmittel (35) zur Erfassung von ein oder mehreren repräsentativen Merkmalen einer für den Rangierbetrieb relevanten Betriebssituation aufweisen. Hierüber wird z.B. eine Fahrzeuglage, insbesondere ein Fahrbetrieb oder ein Ruhezustand des Fahrzeugs (1) detektiert. Ferner kann eine Kupplungssituation des Fahrzeugs (1), insbesondere eine mechanische Kupplungsverbindung oder eine Betriebsmittelverbindung (17) detektiert werden. Auch eine Blockiersituation oder Bremssituation der Fahrzeugräder (25) lässt sich erfassen.

Die Detektionseinrichtung (4) hat ferner ein oder mehrere Detektionsmittel (36) für die Erfassung einer für den Rangierbetrieb relevanten Bediensituation. Dies kann insbesondere eine Ortung eines Bedieners und/oder eines mobilen Bedienteils (9) umfassen.

Die Detektionsmittel (35,36) können mindestens eine entsprechende Sensorik (38,39,40,41) aufweisen. Die Detektionsmittel (35,36) können einzeln oder in Kombination vorhanden sein. Entsprechendes gilt für deren Sensorik (38,39,40,41), die ebenfalls einfach oder mehrfach und in beliebiger Kombination vorhanden sein kann.

Nachfolgend werden einige beispielhafte konstruktive und funktionale Ausgestaltungen der Sicherungseinrichtung (3) anhand der Zeichnungen beschrieben.

Eine Detektion einer Bediensituation ist z.B. durch eine Bedienortung möglich. Hierdurch kann festgestellt werden, ob der Bediener und insbesondere das mobile Bedienteil (9) sich in einer derartigen Position zum Fahrzeug bzw. Anhänger (1) befinden, dass eine Fehlbedienung zumindest weitgehend ausgeschlossen ist. Hierbei kann z.B. eine Aktivierung des Hilfsfahrantriebs (2) bzw. seiner Komponenten und/oder der Bedieneinrichtung (8) nur aus unmittelbarer Fahrzeugnähe erfolgen. Hierdurch wird ausgeschlossen, dass im Gespannbetrieb aus dem fahrenden Zugfahrzeug (15) heraus eine Fehlbedienung erfolgen kann. Hierfür gibt es verschledene Ausgestaltungsmöglichkeiten.

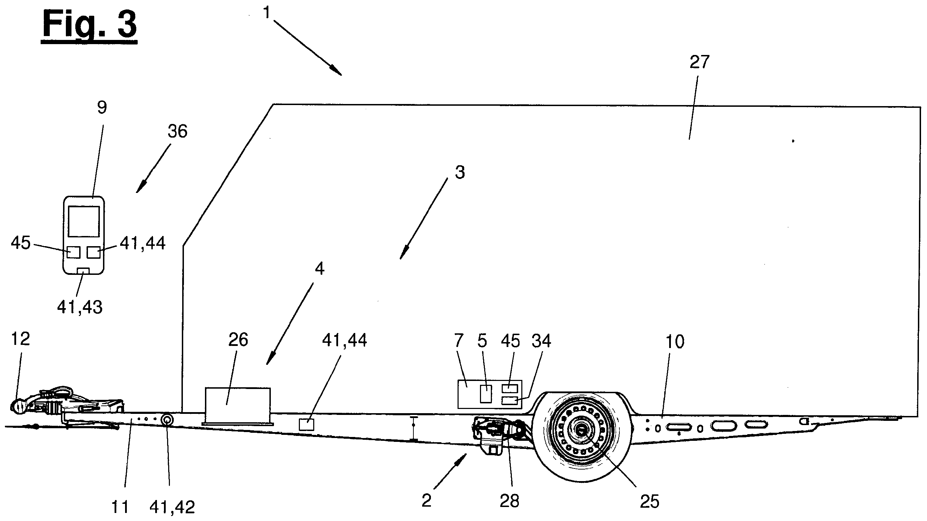

Zum einen weist das Detektionsmittel (36) eine Sensorik (41) mit einem außenseitig am Fahrzeug (1) angeordneten Schaltkontakt (42) zur Bedienungsortung auf, wobei der Schaltkontakt (42) mit der Schalteinrichtung (5) in Wirkverbindung steht und insbesondere über eine elektrische Leitung verbunden ist. Der Schaltkontakt (42) kann gemäß Figur 3 im Bereich der Deichsel (11) oder am Aufbau (27) angeordnet sein. Der Schaltkontakt (42) erfordert für seine Betätigung eine Mindestannäherung des Bedieners oder des mobilen Bedienteils (9). Der Schaltkontakt (42) ist ein berührungsloser Kontakt. Es handelt sich um einen Reedkontakt.

Die Aktivierung oder Betätigung erfolgt durch einen Kontaktauslöser (43), der z.B. als Magnet ausgebildet ist und im mobilen Bedienteil (9) angeordnet ist. Durch den entsprechend begrenzten Magnetfluss ist eine Auslösung nur bei großer Annäherung möglich und erfordert ein Aussteigen des Bedieners aus dem Zugfahrzeug (15). Die Schalteinrichtung (5) aktiviert auf das Signal des Schaltkontakts (42) hin den Hilfsfahrantrieb (2) in der vorbeschriebenen Weise.

Ein solcher Schaltkontakt (42) ist verschleißarm und sabotagesicher sowie betrieb- und ausfallsicher. Auch Fehlauslösungen durch Kinder oder dgl. lassen sich vermeiden.

Die Deaktivierung kann über ein oder mehrere Zeitglieder (34) nach Ablauf einer vorgegebenen Zeitspanne mit festem oder dynamischem Beginn erfolgen. Hierdurch wird sichergestellt, dass eine Deaktivierung des Hilfsfahrantriebs (2) auch dann stattfindet, wenn der Bediener seine Absicht ändert und von einer Betätigung des Hilfsfahrantriebs (2) und einem Rangierbetrieb absieht.

Ansonsten kann in diesem und in den anderen Ausführungsbeispielen grundsätzlich eine bewusste Deaktivierung vom Bediener durch entsprechende Betätigung der Bedieneinrichtung (8), insbesondere des mobilen Bedienteils (9), z.B. durch Drücken einer Ausschalttaste, bewirkt werden.

Eine weitere Detektionsmöglichkeit besteht durch eine Reichweitenbegrenzung der Bedienungsumgebung. Hierfür kann z.B. eine drahtlose Sender-/Empfängeranordnung (44) am mobilen Bedienteil (9) und am Fahrzeug (1) vorhanden sein, die eine Bedienung nur aus der unmittelbaren Umgebung des Fahrzeugs (1) oder aus einer oder mehreren bestimmten Richtungen ermöglicht, wobei in diesen Fällen eine Fehlbedienung aus dem Zugfahrzeug (15) oder von anderer Stelle ausgeschlossen wird. Die Sender-/Empfängeranordnung (44) kann z.B. Funkmodule mit einer begrenzten Reichweite umfassen, wobei das eine Modul am mobilen Bedienteil (9) und das andere Modul an geeigneter und z.B. zentraler Stelle des Fahrzeugs (1), insbesondere in der Nähe der Steuerung (7) oder an einer Antriebseinheit (28,29) angeordnet ist.

In einem anderen Ausführungsbeispiel kann die Anordnung (44) aus einer Richtstrecke mit Lichtstrahlen, Schallwellen oder dgl. Medien mit gerichteter Ausbreitung, insbesondere mit Infrarotlicht bestehen. Der Sender kann z.B. am Bedienteil (9), angeordnet sein, wobei ein oder mehrere Empfänger an ein oder mehreren geeigneten Fahrzeugstelien, z.B. seitlich am Aufbau (27), angeordnet sind. Durch die Ausrichtung der Lichtstrecke, z.B. quer zum Fahrzeug (1) oder auf dessen Rückseite kann sichergestellt werden, dass der Bediener das Zugfahrzeug (15) verlassen hat und demnach eine Fehlbedienung im Gespann- und Fahrbetrieb ausgeschlossen ist.

Die Sender-/Empfängeranordnung (44) kann unabhängig von der Fernbedienung und der Übermittlung der Steuersignale Verwendung finden. Alternativ ist eine Bedienungsortung über die Kommunikationseinrichtung (45) möglich, die z.B. ebenfalls eine Richtungsvorgabe oder eine Reichweitenbegrenzung für die Übermittlung der Bedienungssignale unter Ausschluss des Zugfahrzeugs (15) aufweist. In diesem Fall kann die Aktivierung des Hilfsfahrantriebs (2) über eine Betätigung von Bedienelementen, z.B. Schaltern, Joystick oder dgl. des mobilen Bedienteils (9) geschehen. Eine Deaktivierung kann wiederum zeitabhängig erfolgen.

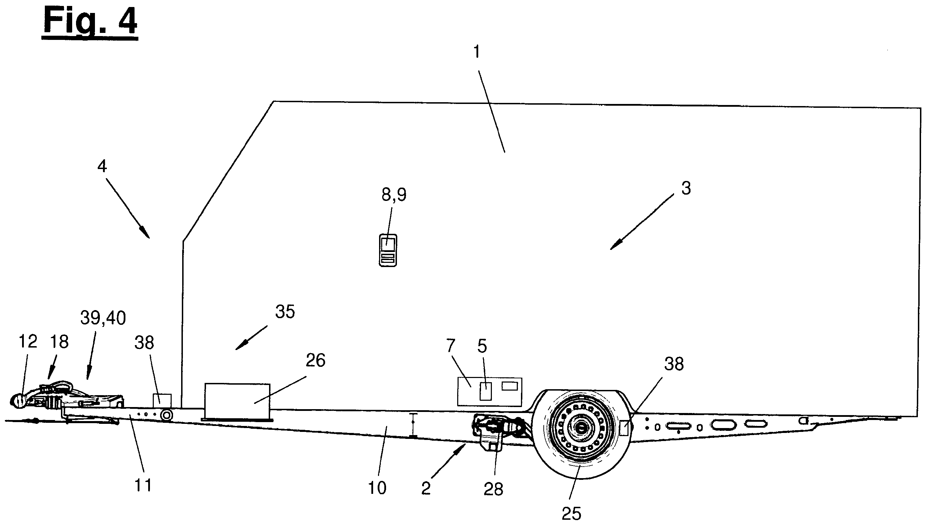

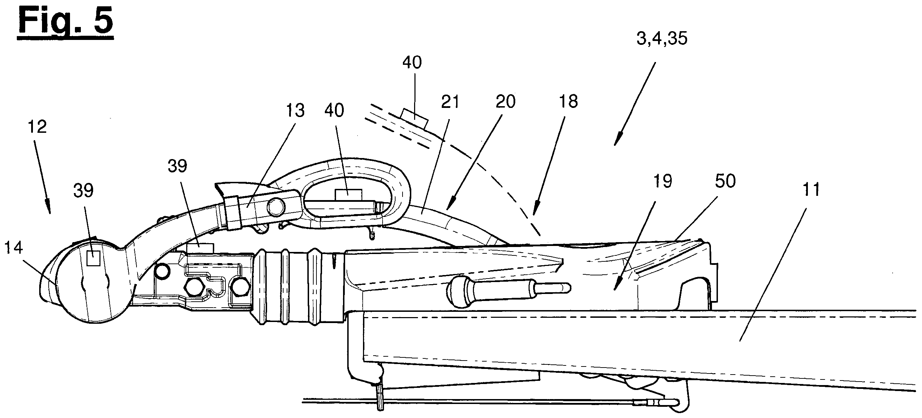

Figur 4 und 5 verdeutlichen Ausgestaltungsmöglichkeiten für die Detektionsmittel (35). Mit einerSensorik (38) kann z.B. die Fahrzeuglage, insbesondere ein Fahrbetrieb oder ein Ruhezustand des Fahrzeugs (1), detektiert werden. Die Sensorik (38) kann z.B. gemäß Figur 4 einen im Bereich von mindestens einem Fahrzeugrad (25) angeordneten Bewegungsmelder aufweisen. Dieser registriert Drehbewegungen des Fahrzeugrads (25) und erlaubt eine Aktivierung des Hilfsfahrantriebs (2) nur bei stehendem Fahrzeug (1). Ein solcher Bewegungsmelder oder Drehgeber kann am Fahrzeugrad (25), am Fahrgestell (10) oder an einer Antriebseinheit (28,29) angeordnet sein. Es kann sich z.B. um einen Refelexlichtaster, ähnlich wie bei Computermäusen, einen Magnettaster wie bei Tachos oder dgl. handeln.

Alternativ oder zusätzlich kann die Sensorik (38) einen am Fahrgestell (10), an einer Antriebseinheit (28,29) oder dgl. angeordneten Bewegungsmelder aufweisen, der z.B. als Beschleunigungssensor ausgebildet ist und hierüber das evtl. Vorliegen eines Fahrbetriebs detektiert. Die Sensorik (38) kann ggf. auch für andere Zwecke eingesetzt werden, z.B. für die eingangs genannte Schlingerbremse (46). Hierbei ist es alternativ möglich, auf dort ggf. vorhandene Sensoren zurückzugreifen und diese für die Sicherungseinrichtung (3) zusätzlich zu nutzen. Die Sensoren oder Melder können mehrfach und in beliebiger Kombination vorhanden sein.

Das Detektionsmittel (35) kann alternativ oder zusätzlich eine Sensorik (39) für die Kupplungssituation des Fahrzeugs (1), insbesondere für eine mechanische Kupplungsverbindung des Anhängers (1) mit dem Zugfahrzeug (15) aufweisen. Figur 5 verdeutlicht diese Ausführung. Die Sensorik (39) kann z.B. als Kontaktmelder oder als Lagenmelder an der Anhängerkupplung (12) ausgebildet sein. Hierfür kann sich z.B. ein Sensor in der Kupplungsschale (14) befinden und durch Berührungskontakt, elektrischen Kontakt oder dgl. feststellen, ob eine Kupplungskugel vorhanden ist oder nicht.

Ein Kontaktmelder kann auch an einer Einrastanzeige angeordnet sein und deren Funktion detektieren. Die Einrastanzeige kann z.B. entsprechend der DE 94 12 514 U1 oder in anderer Weise ausgebildet sein.

Ein Lagenmelder kann beispielsweise am Kupplungshebel (13) angeordnet sein und dessen Neigung oder Endlage detektieren, sofern diese für eine Öffnungs- oder Schließstellung des Kupplungshebels (13) und der Anhängerkupplung (12) signifikant ist.

Die Sensorik (39) kann ferner in die Steckkupplung der Betriebsmittelverbindung (17) integriert sein und eine Kupplungssituation über einen geschlossenen Massekontakt oder auf andere Weise elektrisch detektieren.

Das Detektionsmittel (35) kann in einer weiteren Variante eine Sensorik (40) für die Bewegbarkeit des Fahrzeugs (1), insbesondere für die Umgebungssituation und/oder die Bremseinrichtung (18) aufweisen. Wie Figur 5 verdeutlicht, kann die Sensorik (40) z.B. einen Neigungsmelder und/oder einen Positionsmelder am Handbremshebel (21) aufweisen. Hierüber kann detektiert werden, ob der Handbremshebel (21) in Spannstellung oder in Lösestellung steht. Ferner sind andere Arten und Anordnungen von Meldern zur Detektion einer Handbremsbetätigung möglich.

Eine Aktivierung und Deaktivierung des Hilfsfahrantriebs (2) kann in diesen Fällen ereignisbezogen erfolgen. Über die Bedieneinrichtung (8), insbesondere das mobile Bedienteil (9) wird ein Bedien- oder Steuerbefehl, z.B. Einschalten oder zum Zustellen des Antriebselements (30) gegeben. Die Schalteinrichtung (5) fragt daraufhin das Detektionsmittel (35) ab und aktiviert bei Signalisierung einer für den Rangierbetrieb geeigneten Betriebssituation den Hilfsfahrantrieb (2), z.B. durch Bestromung des Zustellantriebs (33).

Eine Deaktivierung kann auf Grund eines Bedien- oder Steuerbefehls zum Rückstellen des Antriebselements (30) durch eigenständiges Abschalten nach Beendigung der Rückstellung erfolgen und durch die Schalteinrichtung (5) oder durch Selbstabschaltung des Hilfsfahrantriebs (2) geschehen. Wird die Rückstellung vergessen, bleibt das Antriebselement (30) in Arbeitsstellung und verhindert oder erschwert zumindest merklich eine Anhängerbewegung und insbesondere ein Losfahren des Gespanns, wobei ggf. auch ein Warnsignal ausgegeben wird. Dies veranlasst den Bediener zur Eingabe eines Rückstellungsbefehls. Bis zu einem solchen Rückstellungsbefehl bleibt der Hilfsfahrantrieb (22) ggf. aktiviert. Mit dem Detektionsmittel (35) kann ggf. auch ein Ankuppeln des Anhängers (1) an einem Zugfahrzeug (15) detektiert werden und daraufhin der Hilfsfahrantrieb (2) von der Schalteinrichtung (5) deaktiviert werden.

Die Sensorik (40) kann ferner zum Steuern einzelner Funktionen des Hilfsfahrantriebs (2) eingesetzt werden. Eine erstmalige Aktivierung des Hilfsfahrantriebs (2) und außerdem eine Zustellung des Antriebselements (30) an das Fahrzeugrad (25) ist nur bei betätigter Feststellbremse (20), beispielsweise bei angezogenem Handbremshebel (21), möglich. Die betätigte Feststellbremse (20) ist andererseits ein Indikator für die Fahrzeuglage und signalisiert, dass das Fahrzeug (1) sich in Ruhe- oder Parkstellung und nicht im fahrenden Gespannbetrieb befindet. Eine Aktivierung des Rotationsantriebs oder Motors (31) für die Treibwalze (30) ist erst zu einem späteren Zeitpunkt nach Lösen der Feststellbremse (20) bzw. des Handbremshebels (21) möglich, was wiederum durch die Sensorik (40) detektiert und gemeldet wird. Während des Rangierbetriebs bleibt das Antriebselement (30) in Antriebsstellung am Fahrzeugrad (25). Es kann erst wieder in die Ruhestellung zurückbewegt werden, wenn die Feststellbremse (20) wieder betätigt bzw. der Handbremshebel (21) angezogen ist. Dann ist die Parkstellung des Anhängers (1) gesichert. In Abhängigkeit von dieser Bremslagendetektierung oder ggf. auch einen Rückstellbefehl hin kann anschließend auch eine Deaktivierung des Hilfsfahrantriebs (2) erfolgen, wobei ggf. eine gewisse Wartezeit vorgeschaltet ist.

Wird nach dem Rangieren die Feststellbremse (20) nicht betätigt, bleibt das Antriebselement (30) in Kontakt mit dem Fahrzeugrad (25) und wirkt durch Selbsthemmung im Antriebsstrang oder auf andere Weise als Bremsmittel für das Fahrzeug (1), das ein evtl. unerwünschtes Bewegen des Fahrzeugs (1) verhindert. Aus dieser Situation heraus kann eine zeitabhängige Deaktivierung des Hilfsfahrantriebs (2) erfolgen, wobei ggf. zugleich ein Warn- oder Hinweissignal für den Bediener über die Signaleinrichtung (6) oder auf andere Weise ausgegeben wird. Auch in der Deaktivierungsphase blockiert das Antriebselement (30) das Fahrzeugrad (25).

Ein erneutes Aktivieren des Hilfsfahrantriebs (2) erfolgt erst bei Betätigung der Feststellbremse (20) bzw. des Bremshebels (21). Auch hierbei kann ein Warn- oder Hinweissignal ausgegeben werden. Anschließend kann der vorgeschilderte Rangierbetrieb aufgenommen werden, wobei die Zustellung des Antriebselements (30) bereits erfolgt ist.

Bei den vorbeschriebenen Ausführungsbeispielen einer Detektion der Betriebssituation des Fahrzeugs (1) und/oder des Hilfsfahrantriebs (2) erfolgt eine Aktivierung und ggf. eine Deaktivierung des Hilfsfahrantriebs (2) bzw. seiner Einzelfunktionen einerseits über ein Bedien- oder Steuersignal des Bedienungsgerätes (8), insbesondere des mobilen Bedienteils (9) unter gleichzeitiger Abfrage und Prüfung der Signale des Detektionsmittels (35) bzw. der eingesetzten ein oder mehreren Sensoriken (38,39,40). Die Zusammenführung und Auswertung der Signale erfolgt in der Schalteinrichtung(5), die entsprechend die gesamte oder funktionsweise Aktivierung steuert.

Figur 6 zeigt in einer abgebrochenen Draufsicht einen vorderen Deichselbereich mit einer Deichselhaube (50), welche den vorderen Verbindungsbereich der Deichselholme (11) abdeckt. Die Deichselhaube (50) ist auch in Figur 5 dargestellt. Auf oder an der Deichselhaube (50) ist eine Anzeige (47,48) angeordnet, die z.B. eine Statusanzeige darstellen kann und/oder die auch die vorgenannten Warnsignale emittieren kann. Die Anzeige (47,48) kann ein oder mehrere Anzeigeelemente (49) aufweisen. Dies können z.B. optische Anzeigeelemente, insbesondere LEDs, und/oder akustische oder sonstige Anzeigeelemente sein, die ggf. mit Identifikationshilfen, z.B. einer Beschriftung, ergänzt sind. Im Bereich der Anzeige (47,48) kann auch der vorerwähnte Schaltkontakt (42) der Detektionseinrichtung (4) bzw. des Detektionsmittels (36) angeordnet sein.

Die eine Anzeige (47) kann einer Schlingerbremse (46) zugeordnet sein und kann deren Funktions- und Betriebsbereitschaft bzw. evtl. Störungen im Bremsenbereich anzeigen, z.B. durch einen Farbwechsel. Die Schlingerbremse (46) kann hierfür eine geeignete Diagnose- und Überwachungseinrichtung zur Erfassung und Signalisierung von Betriebszuständen und evtl. Störungen haben. Falls die Schlingerbremse (46) blockiert und die Radbremsen spannt oder eine andere Bremsblockade vorliegt, kann der Bediener über die Anzeige (47) eine Warnung bzw. den Hinweis erhalten, dass er zunächst die Blockade aufheben sollte, bevor er den Hilfsfahrantrieb (2) betätigt.

Die vorerwähnte Überwachungseinrichtung (37) des Hilfsfahrantriebs (2) kann ebenfalls eine solche Diagnose- und Überwachungsfunktion zur Erfassung von Betriebszuständen, Positionen, Störungen etc. haben. Hierüber kann z.B. eine korrekte und abgeschlossene Ausführung der Bedienbefehle, z.B. des Zustellbefehls oder des Rückzugbefehls für das Antriebselement (30) erfasst werden. Insbesondere kann die Einnahme der befohlenen bzw. vorgesehenen Position des Antriebselements (30) erfasst werden. Dies kann z.B. die Einnahme der Rückzugsposition betreffen, weil der Anhänger (1) mit zugestelltem Hilfsfahrantrieb (2) nicht von einem Zugfahrzeug geschleppt werden sollte. Eine Anordnung der Anzeige (48) im vorderen Deichselbereich ist hierfür günstig, weil sie beim Ankuppeln bemerkt wird.

Auch die Motoren bzw. Antriebselemente in den Antriebseinheiten (28,29) und andere Funktionsteile des Hilfsfahrantriebs (2) können auf ihre Funktion und Betriebsbereitschaft kontrolliert und durch eine entsprechende, ggf. mehrteilige Anzeige (48) signalisiert werden. Die dem Hilfsfahrantrieb (2) zugeordnete Anzeige (48) kann ebenfalls eine Statusanzeige sein, die Betriebsbereitschaft oder Störung z.B. durch einen Farbwechsel von Grün auf Rot signalisiert.

Die Anzeigen (47,48) und der Schaltkontakt (42) können gemeinsam an einer Stützplatte oder einer anderen Halterung angeordnet sein. Sie befinden sich in einem für den Bediener gut einsehbaren und erreichbaren Bereich am vorderen Fahrzeugende. Alternativ können sie auch an einer anderen geeigneten Stelle des Fahrzeugs (1) angeordnet sein.

In einem nicht dargestellten Ausführungsbeispiel kann die Sensorik (40) für die Bewegbarkeit des Fahrzeugs (1) ein oder mehrere am Fahrgestell (10) oder am Aufbau (27) angeordnete Umgebungsmelder aufweisen, die z.B. als Näherungssensoren ausgebildet sind und die evtl. Hindernisse im Bewegungsbereich des Fahrzeugs (1) beim Rangieren detektieren. Diese können ähnlich wie Parksensoren bei Kraftfahrzeugen ausgebildet und angeordnet sein und ein optisches, akustisches oder sonstiges Warnsignal am Fahrzeug (1) und/oder der Bedieneinrichtung (8) bzw. dem Bedienteil (9) ausgeben, wenn der Abstand zwischen dem Fahrzeug (1) und einem Hindernis zu klein wird. Dies erleichtert das Rangieren auch bei erschwerten Sichtverhältnissen.

Abwandlungen der gezeigten und beschriebenen Ausführungsformen sind in verschiedener Weise möglich. Die beschriebenen Komponenten der Sicherungseinrichtung (3), insbesondere die Sensoriken (38,39,40,41) können einzeln oder mehrfach und in beliebiger Kombination vorhanden sein. Sie erlauben die Abfrage eines einzelnen Situationskriteriums oder von mehreren Kriterien für eine komplexere Situationserfassung. Die Sensoriken (38,39,40,41) können in geeigneter Weise mit der Schalteinrichtung (5) und/oder der Signaleinrichtung (6) in Wirkverbindung, insbesondere in elektrischer Signalverbindung, stehen. Hierbei gibt es außerdem verschiedene andere konstruktive Ausgestaltungsmöglichkeiten für die Melder oder Sensoren zur Bildung der genannten Sensorik (38,39,40,41).

Die Merkmale der Ausführungsbeispiele können miteinander in beliebiger Weise kombiniert und/oder vertauscht werden. Dies gilt insbesondere für die Ausgestaltung der Detektionseinrichtung (4) und ihrer Funktion. Die Detektionsmöglichkeiten sind mannigfaltig und können einzeln oder in beliebiger Kombination eingesetzt werden. Der Hilfsfahrantrieb (2) kann in der beanspruchten Ausführung eine Sicherungseinrichtung (3) für seine Funktion in Abhängigkeit von der Bediensituation aufweisen. Die Abhängigkeit kann zusätzlich oder alternativ von der Betriebssituation des Fahrzeugs (1) und/oder des Hilfsfahrantrieb (2) gegeben sein. Entsprechend dieser Variationsmöglichkeiten können auch die beispielhaft vorbeschriebenen Detektionsmittel (35,36) sowie deren Sensoriken (38,39,40,41) unterschiedlich ausgebildet und einzeln oder in Kombination eingesetzt werden.

Bedeutsam für die Erfindung sind auch die folgenden Merkmale und zwar sowohl einzeln, als auch in Kombination miteinander.

Die Sicherungseinrichtung (3) kann eine Signaleinrichtung (6) zur Signalisierung einer Freigabe des Hilfsfahrantriebs (2) aufweisen, wobei ggf. die Detektionseinrichtung (4) in Wirkverbindung mit der Schalteinrichtung (5) und/oder der Signaleinrichtung (6) steht.

Auch die Schalteinrichtung (5) kann in Wirkverbindung mit einer Signaleinrichtung (6) und/oder in Wirkverbindung mit einer Energieversorgung (26) des Hilfsfahrantriebs (2) und/oder in Wirkverbindung mit einer Bedieneinrichtung (8) stehen.

Die Sicherungseinrichtung (3) und/oder der Hilfsfahrantrieb (2) können ein Zeitglied (34) aufweisen, das ggf. mit der Schalteinrichtung (5) in Wirkverbindung steht.

Die Sicherungseinrichtung (3) kann die Aktivierbarkeit des Hilfsfahrantriebs (2) zeitabhängig steuern. Insbesondere kann die Schalteinrichtung (5) den Hilfsfahrantrieb (2) und/oder die Bedieneinrichtung (8), insbesondere ein mobiles Bedienteil (9), mit zeitlicher Begrenzung freigeben.

### BEZUGSZEICHENLISTE

- 1: Fahrzeug, Anhänger
- 2: Hilfsfahrantrieb, Rangierantrieb
- 3: Sicherungseinrichtung
- 4: Detektionseinrichtung
- 5: Schalteinrichtung
- 6: Signaleinrichtung
- 7: Steuerung
- 8: Bedieneinrichtung
- 9: Bedienteil
- 10: Fahrgestell, Chassis
- 11: Deichsel, Zugdeichsel
- 12: Anhängekupplung
- 13: Kupplungshebel
- 14: Kupplungsteil, Kupplungsschale
- 15: Zugfahrzeug
- 16: Zugkupplung, Kugelhals
- 17: Betriebsmittelverbindung
- 18: Bremseinrichtung
- 19: Betriebsbremse, Auflaufbremse
- 20: Feststellbremse, Handbremse
- 21: Handbremshebel
- 22: Längsträger
- 23: Querträger
- 24: Achse
- 25: Rad, Fahrzeugrad
- 26: Energieversorgung
- 27: Aufbau
- 28: Antriebseinheit links
- 29: Antriebseinheit rechts
- 30: Antriebselement, Treibwalze
- 31: Motor für Antriebselement
- 32: Zustelleinrichtung
- 33: Zustellantrieb
- 34: Zeitglied
- 35: Detektionsmittel für Betriebssituation
- 36: Detektionsmittel für Bediensituation
- 37: Überwachungseinrichtung
- 38: Sensorik für Fahrzeuglage
- 39: Sensorik für Kupplungssituation
- 40: Sensorik für Fahrzeugbremsen
- 41: Sensorik für Bedienerortung
- 42: Schaltkontakt, Reedkontakt
- 43: Kontaktauslöser
- 44: Sender/Empfängeranordnung
- 45: Kommunikationseinrichtung
- 46: Schlingerbremse
- 47: Anzeige
- 48: Anzeige
- 49: Anzeigeelement
- 50: Deichselhaube
- 51: Stützrad

## Patentansprüche

1. Hilfsfahrantrieb für fremdbewegte Fahrzeuge (1), insbesondere Anhänger, mit mindestens einem motorisch angetriebenen Antriebselement (30) und einer motorisch angetriebenen Zustelleinrichtung (32) für die Zustellung des Antriebselements (30) an ein Fahrzeugrad (25) sowie einer Bedieneinrichtung (8), wobei der Hilfsfahrantrieb (2) eine Sicherungseinrichtung (3) für seine Funktion aufweist, **dadurch gekennzeichnet, dass** der Hilfsfahrantrieb (2) eine Sicherungseinrichtung (3) für seine Funktion in Abhängigkeit von der Bediensituation aufweist, wobei die Bediensituation durch eine Bedienortung detektiert wird,
- wobei die Sicherungseinrichtung (3) den Hilfsfahrantrieb (2) oder einzelne Funktionen des Hilfsfahrantriebs (2) aktiviert und deaktiviert und eine Detektionseinrichtung (4) zur Erfassung einer für den Rangierbetrieb relevanten Bediensituation aufweist, *(UA3)*
- *wobei die Detektionseinrichtung* (4) *ein oder mehrere Detektionsmittel (35,36) zur Erfassung von ein* oder mehreren repräsentativen Merkmalen einer *für den Rangierbetrieb relevanten* Bediensituation aufweist, *(UA7)*
- wobei das Detektionsmittel (36) eine Sensorik (41) zur Bedienungsortung aufweist, *(UA8)*
- wobei die Sensorik (41) einen außenseitig am Fahrzeug (1), insbesondere im Bereich einer Deichsel (11) angeordneten Schaltkontakt (42) aufweist, (UA9)
- wobei der Schaltkontakt (42) als berührungsloser Kontakt, nämlich als Reedkontakt, ausgebildet ist. *(UA10)* (A1 + UA3 + UA7 + UA8 + UA9 + UA10)

2. Hilfsfahrantrieb nach Anspruch 1, **dadurch gekennzeichnet, dass** der Hilfsfahrantrieb (2) eine Sicherungseinrichtung (3) für seine Funktion in Abhängigkeit von der Betriebssituation des Fahrzeugs (1) und/oder des Hilfsfahrantriebs (2) aufweist.

3. Hilfsfahrantrieb nach Anspruch 1 oder 2, **dadurch gekennzeichnet, dass** die Sicherungseinrichtung (3) eine mit der Detektionseinrichtung (4) in Wirkverbindung stehende Schalteinrichtung (5) zur Freigabe oder Sperrung des Hilfsfahrantriebs (2) aufweist, welche in Wirkverbindung mit einer Steuerung (7) des Hilfsfahrantriebs (2) und/oder in Wirkverbindung mit dem Antriebselement (30) und/oder der Zustelleinrichtung (32) steht. *(UA4)*

4. Hilfsfahrantrieb nach einem der vorhergehenden Ansprüche, **dadurch gekennzeichnet, dass** die Bedieneinrichtung (8) ein mobiles Bedienteil (9) aufweist, wobei die Schalteinrichtung (5) in Wirkverbindung mit dem Bedienteil (9) steht. *(UA5)*

5. Hilfsfahrantrieb nach einem der vorhergehenden Ansprüche, **dadurch gekennzeichnet, dass** die Detektionseinrichtung (4) einen Bediener und/oder die Bedieneinrichtung (8), insbesondere das Bedienteil (9) ortet. *(UA6)*

6. Hilfsfahrantrieb nach einem der vorhergehenden Ansprüche, **dadurch gekennzeichnet, dass** ein mobiles Bedienteil (9) einen Kontaktauslöser (43), insbesondere einen Magneten, aufweist. *(UA11)*

7. Hilfsfahrantrieb nach einem der vorhergehenden Ansprüche, **dadurch gekennzeichnet, dass** eine Sensorik (41) zur Bedienungsortung eine drahtlose Sender/Empfängeranordnung (44) am Fahrzeug (1) und am mobilen Bedienteil (9) mit einer auf die unmittelbare Fahrzeugumgebung beschränkten Reichweite oder mit einer Richtungsbeschränkung aufweist. *(UA12)*

8. Hilfsfahrantrieb nach einem der vorhergehenden Ansprüche, **dadurch gekennzeichnet, dass** das Detektionsmittel (36) zur Bedienerortung eine Reichweitenbegrenzung auf die unmittelbare Fahrzeugumgebung einer leitungsgebundenen oder drahtlosen Kommunikationseinrichtung (45) des Hilfsfahrantriebs (2) und des mobilen Bedienteils (9) aufweist. *(UA13)*

9. Hilfsfahrantrieb nach einem der vorhergehenden Ansprüche, **dadurch gekennzeichnet, dass** die Sicherungseinrichtung (4) und/oder der Hilfsfahrantrieb (2) eine Überwachungseinrichtung (37) für die Funktionsfähigkeit oder für Störungen des Hilfsfahrantrieb (2) sowie eine Anzeige (48) zur Signalisierung aufweist. *(UA14)*

## Claims

1. Auxiliary drive for vehicles (1), in particular trailers, which are moved by external means and have at least one motor-driven drive element (30) and a motor-driven engagement device (32) for engaging the drive element (30) with a vehicle wheel (25) and an operator control device (8), wherein the auxiliary drive (2) has a securing device (3) for its function, **characterized in that** the auxiliary drive (2) has a securing device (3) for its function in accordance with the operator control situation, wherein the operator control situation is detected by means of an operator control-locating process,
- wherein the securing device (3) activates and deactivates the auxiliary drive (2) or individual functions of the auxiliary drive (2), and has a detection device (4) for detecting an operator control situation which is relevant for the manoeuvring mode,
- wherein the detection device (4) has one or more detection means (35, 36) for detecting one or more representative features of an operator control situation which is relevant for the manoeuvring mode,
- wherein the detection means (36) has a sensor system (41) for the operator control-locating process,
- wherein the sensor system (41) has a switching contact (42) which is arranged on the outside of the vehicle (1), in particular in the region of a shaft (11),
- wherein the switching contact (42) is embodied as a contactless contact, in particular as a Reed contact.

2. Auxiliary drive according to Claim 1, **characterized in that** the auxiliary drive (2) has a securing device (3) for its function in accordance with the operating situation of the vehicle (1) and/or of the auxiliary drive (2).

3. Auxiliary drive according to Claim 1 or 2, **characterized in that** the securing device (3) has a switching device (5) which is operatively connected to the detection device (4) and has the purpose of enabling or disabling the auxiliary drive (2), which is operatively connected to a controller (7) of the auxiliary drive (2) and/or is operatively connected to the drive element (30) and/or the engagement device (32) .

4. Auxiliary drive according to one of the preceding claims, **characterized in that** the operator control device (8) has a mobile operator control component (9), wherein the switching device (5) is operatively connected to the operator control component (9).

5. Auxiliary drive according to one of the preceding claims, **characterized in that** the detection device (4) locates an operator and/or the operator control device (8), in particular the operator control component (9).

6. Auxiliary drive according to one of the preceding claims, **characterized in that** a mobile operator control component (9) has a contact trigger (43), in particular a magnet.

7. Auxiliary drive according to one of the preceding claims, **characterized in that** a sensor system (41) for the operator control-locating process has a wireless transceiver arrangement (44) on the vehicle (1) and on the mobile operator control component (9) with a range which is limited to the direct surroundings of the vehicle or with directional limitation.

8. Auxiliary drive according to one of the preceding claims, **characterized in that** the detection means (36) has, for the operator control-locating process, a range limitation to the direct surroundings of the vehicle of a line-bound or wireless communication device (45) of the auxiliary drive (2) and of the mobile operator control component (9).

9. Auxiliary drive according to one of the preceding claims, **characterized in that** the securing device (4) and/or the auxiliary drive (2) has a monitoring device (37) for the functional capability or for faults of the auxiliary drive (2), as well as a display (48) for signalling.

## Revendications

1. Mécanisme d'entraînement auxiliaire pour véhicules à motricité externe (1), notamment des remorques, comprenant au moins un élément d'entraînement (30) à entraînement motorisé et un dispositif d'approche (32) à entraînement motorisé destiné à approcher l'élément d'entraînement (30) d'une roue de véhicule (25) ainsi qu'un dispositif de conduite (8), le mécanisme d'entraînement auxiliaire (2) possédant un dispositif de sécurité (3) pour sa fonction, **caractérisé en ce que** le mécanisme d'entraînement auxiliaire (2) possède un dispositif de sécurité (3) pour sa fonction en fonction de la situation de conduite, la situation de conduite étant détectée par une localisation de conduite,
- le dispositif de sécurité (3) activant ou désactivant le mécanisme d'entraînement auxiliaire (2) ou des fonctions individuelles du mécanisme d'entraînement auxiliaire (2) et possédant un dispositif de détection (4) servant à détecter une situation de conduite pertinente pour le régime de manœuvre,
- le dispositif de détection (4) possédant un ou plusieurs moyens de détection (35, 36) destinés à détecter une ou plusieurs caractéristiques représentatives d'une situation de conduite pertinente pour le régime de manœuvre,
- le moyen de détection (36) possédant un système de capteur (41) servant à la localisation de conduite,
- le système de capteur (41) possédant un contact de commutation (42) disposé du côté extérieur sur le véhicule (1), notamment dans la zone d'un timon (11),
- le contact de commutation (42) étant réalisé sous la forme d'un contact sans contact, notamment sous la forme d'un contact Reed.

2. Mécanisme d'entraînement auxiliaire selon la revendication 1, **caractérisé en ce que** le mécanisme d'entraînement auxiliaire (2) possède un dispositif de sécurité (3) pour sa fonction en fonction de la situation de conduite du véhicule (1) et/ou du mécanisme d'entraînement auxiliaire (2).

3. Mécanisme d'entraînement auxiliaire selon la revendication 1 ou 2, **caractérisé en ce que** le dispositif de sécurité (3) possède un dispositif de commutation (5) qui se trouve en liaison active avec le dispositif de détection (4) pour libérer ou bloquer le mécanisme d'entraînement auxiliaire (2), lequel se trouve en liaison active avec une commande (7) du mécanisme d'entraînement auxiliaire (2) et/ou en liaison active avec l'élément d'entraînement (30) et/ou le dispositif d'approche (32).

4. Mécanisme d'entraînement auxiliaire selon l'une des revendications précédentes, **caractérisé en ce que** le dispositif de conduite (8) possède une partie de conduite mobile (9), le dispositif de commutation (5) se trouvant en liaison active avec la partie de conduite (9).

5. Mécanisme d'entraînement auxiliaire selon l'une des revendications précédentes, **caractérisé en ce que** le dispositif de détection (4) localise un opérateur et/ou le dispositif de conduite (8), notamment la partie de conduite (9).

6. Mécanisme d'entraînement auxiliaire selon l'une des revendications précédentes, **caractérisé en ce qu'**une partie de conduite mobile (9) possède un déclencheur de contact (43), notamment un aimant.

7. Mécanisme d'entraînement auxiliaire selon l'une des revendications précédentes, **caractérisé en ce qu'**un système de capteur (41) possède, pour la localisation de la conduite, un arrangement émetteur/récepteur (44) sur le véhicule (1) et sur la partie de conduite mobile (9), lequel a une portée qui se limite à l'environnement immédiat du véhicule ou comprenant une limitation directionnelle.

8. Mécanisme d'entraînement auxiliaire selon l'une des revendications précédentes, **caractérisé en ce que** le moyen de détection (36) possède, pour la localisation de la conduite, une limitation de la portée à l'environnement immédiat du véhicule d'un dispositif de communication (45) filaire ou sans fil du mécanisme d'entraînement auxiliaire (2) et de la partie de conduite mobile (9).

9. Mécanisme d'entraînement auxiliaire selon l'une des revendications précédentes, **caractérisé en ce que** le dispositif de sécurité (4) et/ou le mécanisme d'entraînement auxiliaire (2) possèdent un dispositif de surveillance (37) pour l'aptitude fonctionnelle ou pour des défauts du mécanisme d'entraînement auxiliaire (2) ainsi qu'un indicateur (48) destiné à la signalisation.
